# EUROPEAN PATENT SPECIFICATION

(11) **EP 2 395 371 B1**
(45) Date of publication and mention of the grant of the patent: **26.02.2020**
(21) Application number: 11004799.0
(22) Date of filing: 10.06.2011
(51) Int. Cl.: G01S 13/87, G01S 13/91, G01S 7/02, G01S 13/72

(54) **Surveillance radar return filtering and analysis**
Filterung und Analyse von Überwachungsradarechos
Filtrage et analyse d'échos d'un radar de surveillance

(30) Priority: 11.06.2010 GB 201009784
(43) Date of publication of application: 14.12.2011
(73) Proprietor: Cyrrus (Products) Limited, Start Hill Bishop's Stortford Hertfordshire CM22 7WE (GB)
(72) Inventor: Wills, Martyn, Thirsk North Yorkshire YO7 1FW (GB); Warren, Nigel Frederick Cordon, Dunmow Essex CM6 3TJ (GB)
(74) Representative: Dehns

(56) References cited:
- WO-A1-2009/144435
- JACKSON C A ET AL: "Options for mitigation of the effects of windfarms on radar sytems", IEE CONFERENCE PUBLICATION, INSTITUTION OF ELECTRICAL ENGINEERS, LONDON, GB, 15 October 2007 (2007-10-15), pages 1-6, XP007913802, ISSN: 0537-9989 [retrieved on 2009-02-13]
- SRINIVASAN: "Distributed radar detection theory", IEE PROCEEDINGS F COMMUNICATIONS, RADAR AND SIGNAL PROCESSING, vol. 133, no. 1, 1 February 1986 (1986-02-01), page 55, XP055100223, ISSN: 0143-7070, DOI: 10.1049/ip-f-1:19860010

## Description

The present invention is concerned with improving the reliability of returns from aircraft surveillance radars, and particularly with removing returns from non-aircraft targets such as, but not exclusively, wind turbines.

Although most of the following description relates to the problems associated with, and solutions for, wind turbine farms in the vicinity of surveillance radars for air traffic control, the techniques of the present invention could also be used for avoiding false detection of other non-aircraft targets or obstructions as aircraft.

The adverse effect of the turbines at wind farms on the operation of primary surveillance radars (PSR) used for air traffic control (ATC) purposes is well established. Concerns with radar interference result in the rejection of a significant proportion of the wind farm development proposals.

The radar cross section (RCS) of a large rotating turbine plus its supporting structure is of the order of 1,000+ m². This is significantly greater than the RCS of a small aircraft, which is generally in the range 1 - 10 m². These turbines generate significantly stronger radar returns than any aircraft, even wide-bodied commercial jets. It therefore becomes very difficult for the radar to detect and accurately report the presence of an aircraft near to these wind farms.

Doppler frequency shift filtering is one of the mechanisms used by radar to aid the detection of an aircraft flying in an area where there is a lot of clutter from the ground and other obstructions. This helps the radar to identify moving objects with speeds typical of aircraft that are amongst strong radar returns from stationary clutter. Unfortunately the radar returns from rotating blades also have Doppler components, the nature of which is similar to that of aircraft.

Manufacturers of radar are seeking ways of enhancing the capability within their PSRs by both improving the successful detection of aircraft in the vicinity of wind farms and reducing the amount of clutter arising from the turbines that is presented to the ATC radar operator. A modern primary radar essentially has two parts to its processing. The front end processing for detection of targets, where the sensitivity and detection thresholds, amplitude thresholds and temporal threshold processing can be altered to improve the detection of wanted targets in different parts of the radar's coverage volume. The back end processing functions in the digital domain to enhance the accurate reporting of the detected targets and to reduce or eliminate unwanted returns.

Other solutions that have been considered include altering the tilt of the radar antenna to avoid visibility of the turbines and/or creating track initiation inhibit zones around the wind farm. The first of these solutions is not ideal in that the actual performance of the radar in detecting aircraft is adversely affected by tilting the antenna. The creation of track initiation inhibit zones is also not acceptable as this can blank out any so-called 'pop-ups' - i.e. aircraft that have not previously been tracked by the radar, such as general aviation or helicopters.

Adjustments to the front end processing to reduce the radar returns from turbines invariably have the undesired effect of also eliminating the smaller radar returns from aircraft near to the wind farms. Adjustments to the back end processing to improve the accurate reporting of aircraft near wind farms rarely produce the desired results unless the Doppler filtering can first be made more sophisticated to discriminate aircraft from turbines. All other measures normally available in the back end processing, such as Range & Azimuth Gating and Track Initiation Zones, tend to suppress the reporting of aircraft as well as reducing the false target reports from the turbines.

Whilst radar manufacturers strive to find acceptable solutions within their products to make them 'wind farm tolerant', these are yet to be proven and accepted by the ATC regulatory bodies. Also, they need an Air Navigation Service Provider (ANSP) to make the significant capital investment in new radar, unless they own existing radar which can be upgraded with a manufacturer's solution.

Alternative approaches to the problem have been proposed, such as that in US 2008/0111731, which use special radar not ordinarily used for air traffic surveillance. These special radar are either set up to have coverage in the vicinity of the wind turbines but do not actually illuminate them, or are located in close proximity to the turbines and perform processing to provide a three dimensional 'bubble' of aircraft coverage which is free of turbine interference. Either way, the output from these special radar systems has to be integrated with the output from the air traffic surveillance radar by substitution of coverage in the affected volume.

Multi-radar trackers (MRT) at national ATC centres are an established technique and are used to fuse the output from multiple radars, with overlapping coverage, into a single comprehensive display over a wide area. These trackers work in the digital domain and take in the output from the contributing radar in a serial data format to a recognised standard for radar data transmission.

These multi-radar techniques do enable some mitigation of the problems caused by turbines since they are able to leverage the data from overlapping coverage to better determine the passage of aircraft through the airspace over wind farms.

Where an ANSP is an individual airport with its own approach radar service, subscription to an external MRT feed can be an expensive commitment. It removes ownership and control of the radar service from the airport, and the radar coverage will not necessarily be suited to the airport's operational requirement. An independent airport that has made the investment in its own radar is unlikely to be inclined to this option to enable a wind farm development.

JACKSON C A ET AL: "Options for mitigation of the effects of windfarms on radar systems2, IEE CONFERENCE PUBLICATION, INSTITUTION OF ELECTRICAL ENGINEERS, LONDON, GB, 15 October 2007 (2007-10-15), pages 1-6, XP007913802 is describing data fusion.

SRINIVASAN: "Distributed radar detection theory", IEE PROCEEDINGS F COMMUNICATIONS, RADAR AND SIGNAL PROCESSING, vol. 133, no. 1, 1 January 1986 (1986-01-01), page 55, XP055100223, ISSN: 0143-7070, DOI: 10.1049/ip-f-1:19860010 is a theory paper for when a radar has multiple receivers differently located (multi-static).

The problem being addressed by Srinivasan is how it is decided whether a target is present or not when some of the receivers think there is and other receivers in the multi-static receiver array think otherwise. He is describing a form of majority decision making using the Neyman-Pearson hypothesis in order to minimise the probability of failing to detect the presence of a target.

The present invention aims to provide a solution to the above problems. This solution uses two or more normal air traffic surveillance radars all of which may be illuminating the wind turbines. It employs multi radar techniques but with the advantage of additional processing applied in a manner that is particularly beneficial for a local airport radar providing approach control.

In one aspect, there is provided apparatus for filtering output signals from a first radar used for air traffic control, comprising:
means arranged to receive plot extracted output signals from the first radar due to detection by said radar of a target in an area of the area of coverage of said radar in which enhancement is desired;
means arranged to obtain plot extracted output signals from one or more remote radars also used for air traffic control and having an area of coverage encompassing the area in which enhancement is required;
means arranged to determine whether or not to pass data from the first radar indicative of the target for further reporting to an air traffic control centre based on the signals from the one or more remote radars.

In a second aspect, there is provided a method for filtering output signals from a first radar used for air traffic control, comprising:
receiving plot extracted output signals from the first radar due to detection by said radar of a target in an area of the area of coverage of said radar in which enhancement is desired;
obtaining plot extracted output signals from one or more remote radars also used for air traffic control and having an area of coverage encompassing the area in which enhancement is required;
determining whether or not to pass data from the first radar indicative of the target for further reporting to an air traffic control centre based on the signals from the one or more remote radars.

The invention enables an ANSP, such as an independent airport, to transparently insert the invention, when embodied in an suitable apparatus, between its radar output and its Radar Data System that provides the display for its ATC approach controllers. The invention is also supplied with radar target reports, preferably received in serial data messages from one or more other suitable (existing) radars that also have coverage of the airspace over the wind farms.

The invention uses the data from the remote radar(s) to determine which returns from the ANSPs radar are from wind turbines or other obstructions - or, put another way, returns that are not, or unlikely to be, due to aircraft. These radar returns are eliminated from the output to the RDP.

The invention preferably also uses techniques that are typically found in MRTs to determine the most likely presentation of the tracks of individual aircraft in the vicinity of the wind farms, but with the added advantage of having first removed the turbine returns from the processing chain.
However, rather than applying the MRT techniques in a blanket manner over the entire area of overlapping radar coverage, the preferred embodiment only applies these in the relatively small area around the wind farms and does so with reference to the output of the ANSP's radar. The advantage here is that any failure to receive the data from the remote radar(s) will only result in coverage degradation in a very small part of the total area of interest to the air traffic controllers.

The advantage for the ANSP is that the invention provides a viable mitigation to a wind farm development proposal whilst being able to retain both use and control of its existing surveillance infrastructure.

As well as the owners of the local radar, it is likely that the owners of the radars providing the remote data are also similarly affected by the proposed wind farm development. Each would benefit from the invention and the possibility of a mutually beneficial relationship of sharing their radar data.

Preferred embodiments of the present invention will now be described by way of example only with reference to the accompanying drawings.

The invention may be embodied in either a stand-alone apparatus as described above or within a centralised MRT as a method for removing the unwanted radar target reports arising from wind turbines.
Figs. 1A and 1B show overlapping areas of coverage of three radars in relation to a wind turbine;
Fig. 2 shows a schematic diagram of a preferred wind turbine filter according to the present invention;
Fig. 3 shows a wind farm zone;
Fig. 4 shows the overlapping areas of coverage of three radars and the zones of particular interest in the present invention;
Fig. 5 is a schematic diagram of one system according to the present invention; and
Fig. 6 is a schematic view of a possible system according to the present invention.

To describe the invention, a scenario is discussed, by way of example only, in which one or more wind farms lie within the overlapping coverage of two or three primary radars and that all of the radars have partial or complete visibility of one or more of the wind farms.

The turbines at these wind farms impair the performance of the radar by creating high levels of false targets from strong radar returns with a high Doppler shift component. This makes it difficult to both detect and determine the position and passage of the aircraft, and it also causes track seduction with the resultant incorrect reporting of aircraft positions.

The tracker function within a single radar head, either primary only or combined, is generally unable to cope with the returns produced by rotating turbines and the aircraft tracks will either become lost in the clutter or seduced by the turbines. The array of turbines may also create an obstruction, impairing the radar low level coverage of aircraft beyond the array.

All of the radar preferably have plot extracted serial data output. The plot extracted serial data output is preferably in a standard format for radar data.

Further, the plot extracted serial data output is preferably as plots (primitives). Where the radar plot extractor includes a tracker function then it is preferably possible either to disable the tracker or to create a Primitive Zone over the area occupied by the wind farms.

A source of secondary surveillance data (SSD) is preferably also available, either from at least one of the radar involved being a combined PSR/SSR head or from another source such as SSR, multilateration sensor or ADS-B receiver.

### Discriminating Targets (in Particular Aircraft) from Turbines and the Like

A PSR should achieve a minimum of 80% probability of detection (Pd) for an aircraft in coverage. This is more likely to comfortably exceed 90% with modern PSRs for commercial aircraft in the part of the coverage volume where cover is solid. Where a target is illuminated by three different radars in an area of such coverage then it is expected that all of these radars will see the target.

The effect of a wind turbine on a PSR is dependent on the aspect it presents to the radar. Face on to the turbine, the returns from the large RCS of the blades should be filtered out by the low speed filters on the grounds of being a stationary target. However sideways on to the turbine, the rotation of the blades creates a Doppler shift similar to that caused by the flight of an aircraft travelling with a significant radial component with respect to the radar. These returns will pass through the Doppler filters and be interpreted as a valid detection.

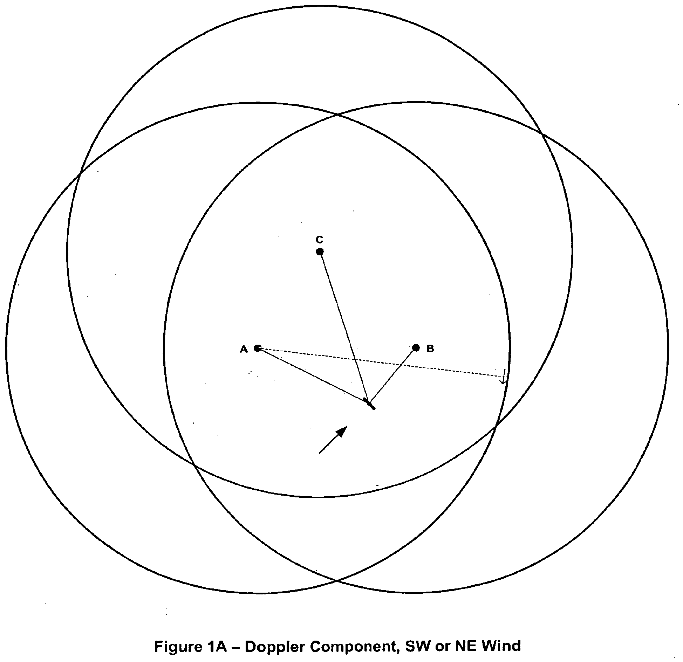

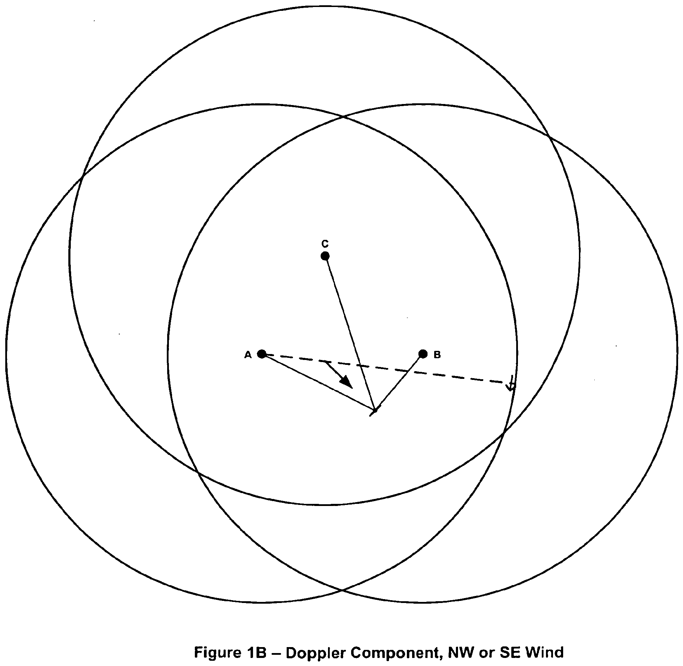

Where three different radars illuminate a turbine on very different azimuth bearings, it is expected that the Doppler component will be quite different for at least one of the radar. This is illustrated in Figures 1A and 1B.

Figure 1A shows a single turbine in a representative geometrical relationship with three radars as would be created by a prospective wind farm development, and existing radars at A, B and C. For the south-westerly wind direction shown it is expected that the radar at A and C will experience a high Doppler component, whereas it should be fairly negligible for the radar at B. A north-easterly wind will create the same effect.

A change of wind direction to either the NW or the SE would result in a relatively low Doppler component to radar A and C whilst radar B has a high Doppler component, as shown in Figure 1B.

In an example, a wind farm is planned to have 15 turbines. A spreadsheet has been prepared for 3 radars each with selectable Pd to represent the level of detection on account of Doppler component. In the example in Table 1 below, radar A has a 90% Pd of detecting the turbines, radar B a 75% Pd and radar C a 20% Pd. Using random number generation and logically AND-ing the result it can be seen that only one of the turbines (T7) is seen by all three radars in this instance. This may change slightly from scan to scan, but the total detected by this method will always be low.

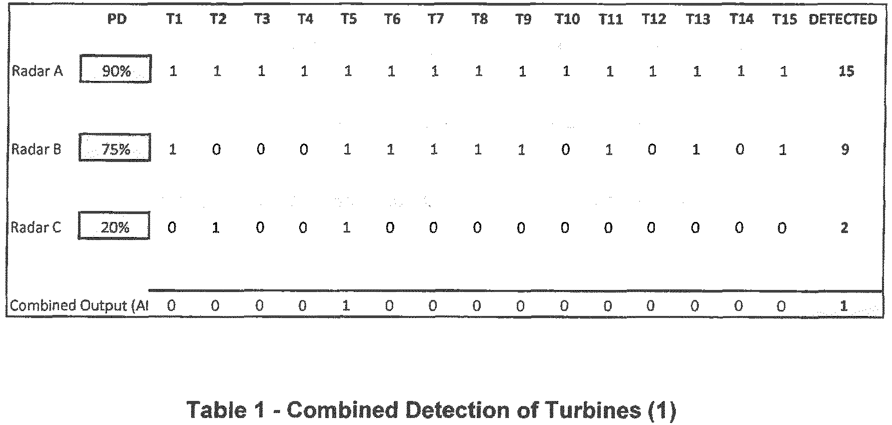

Table 2 shows the effect of having two of the three radars with low Pd of the turbines. This results in none of the turbines being seen by all three radars on a particular scan. This may change slightly from scan to scan, but the total detected by this method will always be low.

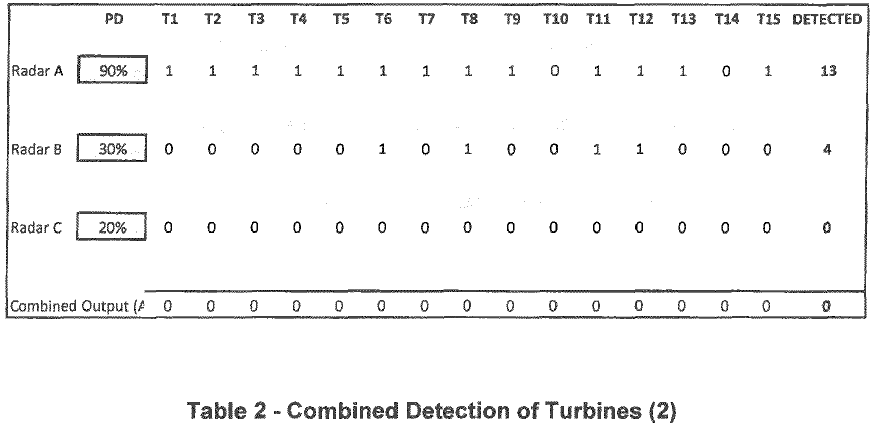

Were each of the turbines (T1 to T15) in the spreadsheet to represent an aircraft with a high Pd for each of the radar, then the combined logically AND-ed output becomes much higher, as shown in Table 3. The result is very different from Tables 1 and 2. It lays the foundation for the solution being proposed.

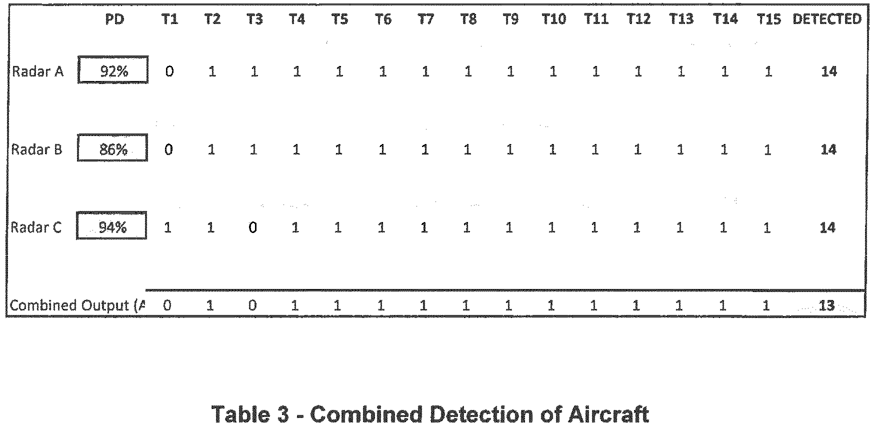

At the core of the proposed solution is a process to remove the radar returns from turbines etc. and to reinforce the returns from aircraft by examining the output from the three radars involved in the scheme. Only targets seen by all three radars can normally be regarded as aircraft.

As the process is probabilistic, however, additional mechanisms are preferably also introduced to improve the elimination of returns from turbines and identify returns from aircraft. In preferred embodiments, there have to be ways of dealing with the fact that returns from an aircraft may only be seen by two of the radar on a given scan and there is the need to avoid classifying this as the detection of a turbine.

One preferred solution to this is, in addition to using remote radar returns, using turbine positions. The location of each turbine is known. This can be used for correlation checks with returns believed to be due to turbines to further refine the decision process.

Turbine spacing can typically be in the region of 275 m to 300 m. This is considerably below the target resolution capability of a typical primary radar. Several closely-spaced turbines may typically give rise to a single radar return whose position does not precisely match the location of any one of the turbines.

The locations of the turbines may need to be set to match the co-ordinates of known turbine radar returns. This is expected to be bespoke for each of the radars in the scheme.

In addition, or alternatively, the accuracy of the radar returns can be improved using aircraft tracks. The enhanced area occupied by the turbines is relatively tiny (typically less than 0.1%) compared with the coverage area of the radar. Most commercial aircraft will transit over a typical EA in relatively few scans of a radar with a turning rate of 15 RPM. The tracking function operating on targets outside of the EA will know where it expects to see the aircraft's returns as it progresses into the EA. This can be used to examine returns from within the WFZ to determine which of the returns are best matched to the aircraft's trajectory. This process is enhanced by using the tracks developed from the output of three different radars, both to build greater confidence in tracking accuracy and the fact that at least one of radar should be less affected by the turbines and so able to provide acceptable Pd of aircraft over the EA.

### Turbine Return Reduction

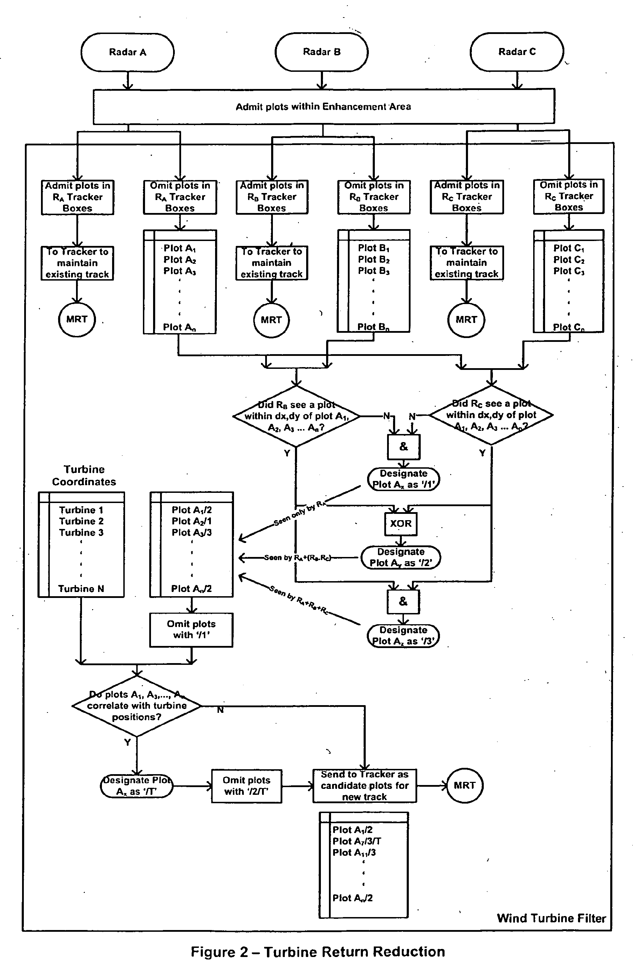

One aspect of the present invention provides a radar filter, integrating the solution elements identified in the previous section. A core process diagram can be generated as given in Figure 2, showing a preferred filter.

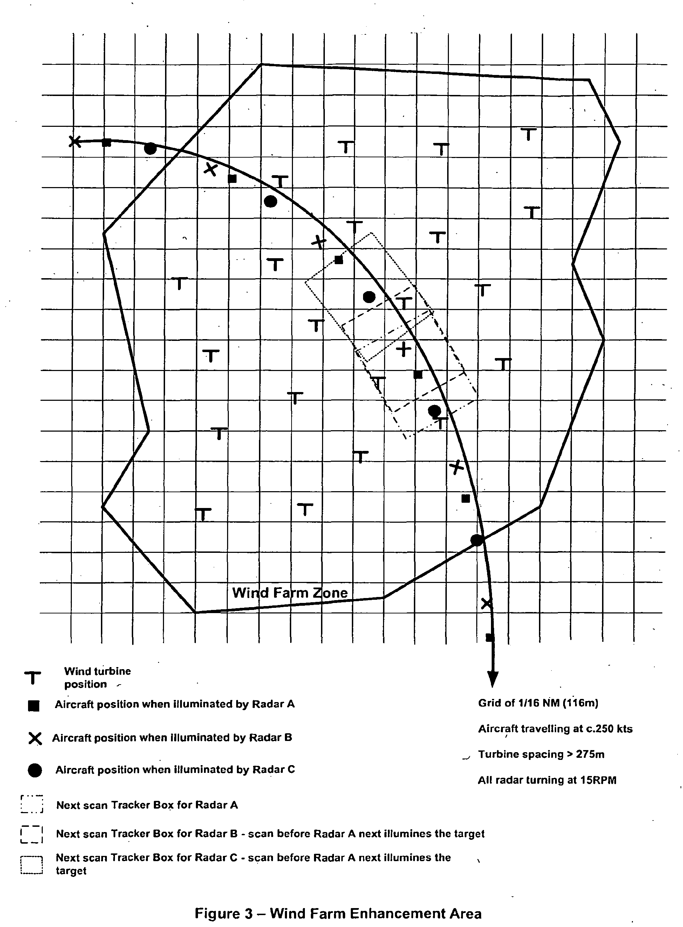

In Figure 2, Radar A is the local radar. The inputs from Radar B and Radar C are being used to determine whether or not the Radar A returns within the EA are attributable to turbines. The inputs from the radars involved are synchronised to the timing of the local radar and are presented within a common system of co-ordinates. These preparatory processes are preferably performed by the tracker/assignor/synchroniser function and the transform co-ordinates function shown for each of the Radars A, B & C in Figure 3. The tracker/assignor/synchroniser function also inserts the next scan tracker box information in the data supplied with the radar inputs to both the wind turbine filter and the multi radar tracker. Target reports from established tracks coming from Radar A, B & C which lie within their tracker boxes are forwarded directly to the multi radar tracker. All other target reports coming into the wind turbine filter are subject to a decisional process to determine their likelihood of being a wind turbine. The reports determined to have a high probability of being a valid aircraft target are also forwarded to the multi radar tracker, whilst all others are removed.

Figure 2 will now be described in more detail.

The wind turbine filter is only concerned with radar returns or plots within the area requiring enhancement - i.e., in this example, within the area occupied by a wind farm. This area is an area within the overall coverage of the local radar - radar A as well as the remote radars - in this case two remote radars, radar B and radar C.

As a first stage, therefore, the filter only admits plots within the area. Any plots for radar A outside of the area are processed with radar A operating in its usual manner without the present invention, since the problems associated with wind turbines are not considered to exist outside of the area. Radar A might use various techniques, as described above, to detect and track, and report aircraft outside of the area but the present invention, at least as far as the filter is concerned, is only concerned with plots within the area that could be aircraft or could be due to wind turbines.

Next, for radars A, B and C, any plots that are in the respective radar's tracker box, as described above, are sent to the multi radar tracker to maintain the existing track(s) and are treated as aircraft in the further processing and reporting of plots. These plots are not further processed by the filter as the filter is only concerned with filtering out plots that might be due to wind turbines. Those that are in the respective tracker boxes are not considered to be due to wind turbines and can, therefore, be forwarded to the remainder of the reporting system. Those plots within the area that are not in the respective tracker boxes, and which could, therefore, be due to wind turbines are then further processed by the filter.

In the example shown, the filter performs a logic determination, using the local radar - radar A - as the starting point.

Thus, for each plot of radar A within the wind farm zone that was not in a tracker box of RA and, therefore, is to be further processed by the filter, a determination is made as to whether the same plot was also seen by radar B and/or radar C. Those seen only by the local radar, radar A, are designated as such, in this example as a /1 plot and stored in memory. Those plots seen by radar A and **one** of the other two radars (but not the other) is also designated accordingly, in this example with /2. Those plots that are seen by **all three** radars are also designated accordingly - in this case as /3 plots and stored with this designation.

The filter has, therefore, determined which of the plots detected by radar A are only seen by that radar and not by the remote radars, which are seen by all of the radars, and which are seen by only some of the remote radars.

Those that are only seen by the local radar - radar A, but not by any of the remote radars are, based on the principles discussed above in relation to, for example, Tables 1 and 2, considered to be due to wind turbines and these plots are, therefore, omitted - i.e. filtered out and not used for further processing or reporting.

This leaves plots seen by radar A that are either seen by all three radars or by radar A and one of the other two radars. These plots are further processed to determine whether they are likely to be due to aircraft or to wind turbines.

In the preferred embodiment shown, the position coordinates of the turbines in the wind farm, which are known, are stored in the filter for comparison with the plots from the radars.

Those plots seen by radar A and at least one of the remote radars are compared with the turbine positions.

If the plots **do** correlate with turbine positions, they are designated accordingly, in this case with a /T.

Any of these plots that were previously designated with a /2 - i.e. seen by the local radar and only one of the remote radars, and also correspond to turbine positions - i.e. those designated /2/T are assumed to be due to wind turbines and are omitted - i.e. filtered out by the filter not used in further processing and reporting of the plots. Others of the plots that **do** correspond to turbine positions but were designated, previously, with /3 - i.e. were seen by all three radars, are determined to be probably due to aircraft since all three of the radars returned the same plot (compare with Table 3) are forwarded for further processing and reporting.

Plots that were seen by radar A and at least one of the remote radars, but which do not correspond to a known turbine position are also considered to be probably due to aircraft. Thus, the filter removes any plots that were only seen by the local radar and not by the remote radars, as, following the principles of Tables 1 and 2, above, these are likely to be due to wind turbines. The filter also then filters out some of the plots that were seen by the local radar and one of the remote radars but not the other, if, for example, these correlate with known turbine positions as these are also considered to be due to wind turbines. Plots seen by all three of the radars are considered to be due to aircraft and are forwarded for further processing and reporting. Also, plots seen by the local radar and only one of the remote radars could be due to aircraft, e.g. pop-up aircraft and if these do not correlate with the turbine positions these are also forwarded for further processing.

Figure 3 shows a wind farm being over flown by an aircraft under the surveillance of three radars. It is illustrative and does not represent the planned quantity and positioning of the turbines at any proposed development. These radars all illuminate the aircraft at different instances as they each turn at a nominal 15 RPM. The tracker boxes are shown for a particular scan and indicate the areas within which any plots would be returned directly to the trackers rather than forwarded to the turbine filtering process.

The system according to the preferred embodiment of the present invention takes in returns from the local radar - radar A as well as returns from the remote radars Radar B and Radar C and, if desired, secondary surveillance data. This data is all decoded and validated. All of the data from Radar A is passed on to the next stage but, for the remote radars, only those plots within an area surrounding the multi-sensor zone which envelopes the enhancement area are used.

The admitted plots from each of the radars are, in the preferred embodiment, associated with secondary surveillance data from a suitable source to enable target processing three dimensions converted to a common coordinate system appropriate to multi radar techniques and those from radars B and C are both synchronised to the timing of the radar and transposed to and aligned with its origin. Plots from each of the radars lying within the multi sensor zone are forwarded to the wind turbine filter and multi radar tracker stages.

Then, those plots within the enhancement area are passed to the wind turbine filter as described above. Those outside of the enhancement area are processed in the usual way. In this example, they are passed to the multi radar trackers as described above.

From the wind turbine filter, those plots found to be within the respective trackers of the radars are then forwarded to the multi radar tracker without being further filtered. Also, the plots remaining after the filtering process - i.e., in the example described above, those plots seen by all three radars and also those plots seen by radar A and only one of radars B and C, but not correlating to turbine positions - are also passed to the multi radar tracker.

Thus, the wind turbine filter has filtered out all plots from radar A that are deemed likely to have been due to wind turbines and those that are deemed likely to be due to aircraft are used in a known multi radar technique together with plots from the various radars outside of the wind farm zone.

Returns from the individual turbines will not necessarily be recognised as such by the radar due to the limitations of its target resolution capabilities. Returns from several turbines, or turbines plus aircraft, may be aggregated into fewer plots. The combined processing of the wind turbine filter and the multi radar tracker is optimised to minimise the loss of aircraft detection and maximise the rejection of returns from wind turbines.

Preferred embodiments of the invention bring together the elements discussed above to create a function capable of overcoming the adverse effects of a wind farm on primary radar.

The principle of the invention, at least in preferred embodiments, is that the local radar provides the output for all areas in the normal way except for that area where coverage enhancement is desired. This coverage enhancement is achieved by sourcing data from remote radar heads which also have coverage over the area for enhancement. Where enhancement is taking effect, it is always in relation to the local radar. The benefit of this is that the loss of enhancement for any reason will result in seamless transition to the local radar for all of the coverage.

The enhancement area in the examples described is that occupied by turbines. Alternative situations may include areas of poor low level coverage due to terrain obstruction or other non-aircraft obstructions.

For multi radar techniques to be viable over an area such as a wind farm it will be necessary, in preferred embodiments, for the process to be active in the area around the enhancement area so that incoming tracks from the remote radar can be established and synchronised with the local radar. A multi sensor zone is defined which envelopes the enhancement area with sufficient area to ensure the multi radar tracking function is established before aircraft cross the boundary into the enhancement area.

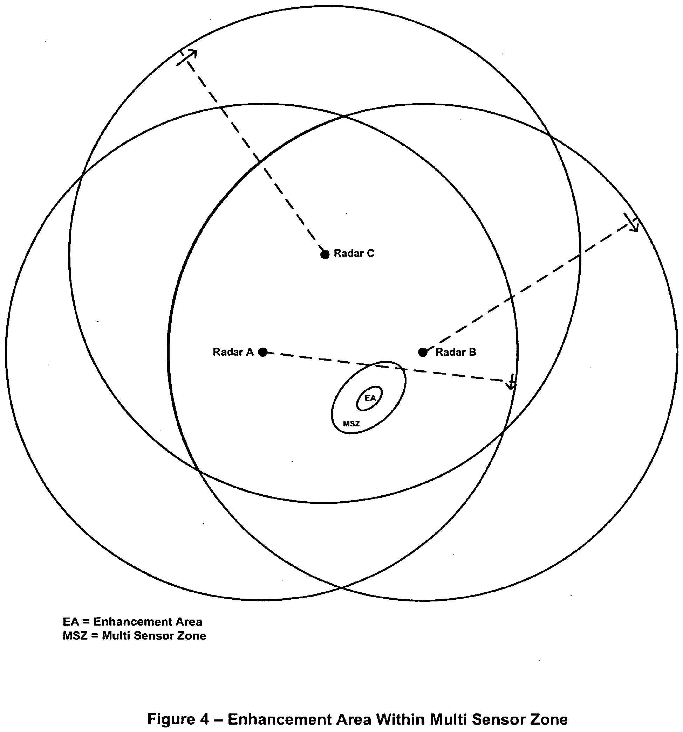

Figure 4 shows the scenario where Radar A is the local radar.

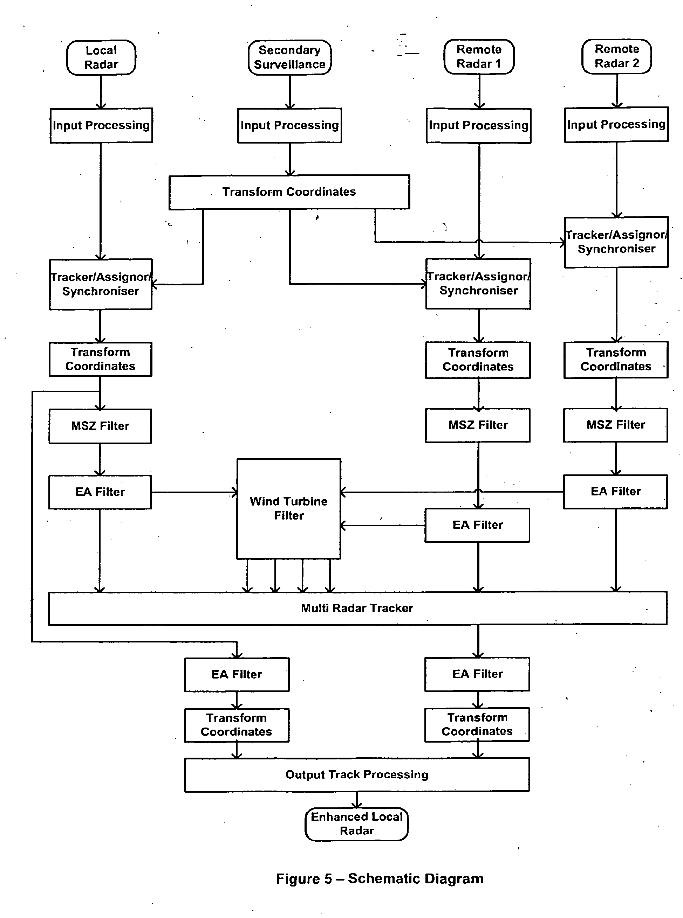

Figure 5 provides a summary block diagram of a preferred embodiment of the present invention. The detail within the Wind Turbine Filter element has already been discussed in relation to Fig. 2.

The incoming plot extracted radar data is preferably decoded and validated to ensure the data is recognised and usable, coming from the expected source and satisfying safety criteria such as test target alignment.

The tracker/assignor/synchroniser uses secondary surveillance data, where available to enhance the radar reports with altitude and identity data. The output from this process for each of the remote radar includes synchronising the report positions to the rotation of the local radar. The streams of target reports from each of the local and remote radar are transformed into a coordinate system of common origin and appropriate type for multi radar processing.

The preferred embodiment of the invention is only interested in remote radar data pertaining to the MSZ, hence a filter to block all unwanted data.

The multi radar tracker will now be described.

The multi radar tracker accepts all target reports from the local radar and the remote radars via the tracker/assignor/synchroniser process and the transforms co-ordinates process which fall within the MSZ but outside of the enhancement area. The target reports from the local radar and the remote radars which fall within the enhancement area are those forwarded by the wind turbine filter. The MRT uses track weighting principles to determine the best fit path of each aircraft track through the MSZ. It also determines whether tracks need to be initiated or terminated within the MSZ.

The output track processing of the preferred embodiment will now be described.

The output track processing function accepts target reports from the local radar which lie outside of the enhancement area and target reports from the multi radar tracker which lie within the enhancement area. Firstly these are restored to the radar co-ordinate system being used by the local radar. The tracks crossing the enhancement area boundary are processed into continuous tracks. The outgoing reports are arranged into the same format, structure and data rate as that supplied from the Radar A input. This enables the system of the invention to be readily bypassed from service.

Summarising Fig. 5, the system according to the preferred embodiment of the present invention takes in returns from the local radar - radar A as well as returns from the remote radars Radar B and Radar C and, if available, secondary surveillance data. This data is all decoded and validated.

The data from each of the radars is associated with secondary surveillance data and the data from the remote radars is further synchronised with the local radar. The data from each of the radars is converted into a common co-ordinate system centred on the local radar.

All of the data from Radar A is passed on to the next stage but, for the remote radars, only those plots within a multi-sensor zone surrounding and enveloping the wind farm area are used.

Then, those plots within the wind farm area are passed to the wind turbine filter as described above. Those outside of the wind farm area are processed in the usual way. In this example, they are passed to the multi radar tracker.
From the wind turbine filter, those plots found to be within the respective trackers of the radars are then forwarded to the multi radar trackers without being further filtered. Also, the plots remaining after the filtering process - i.e., in the example described above, those plots seen by all three radars and also those plots seen by radar A and only one of radars B and C, but not correlating to turbine positions - are also passed to the multi radar tracker.

Thus, the wind turbine filter has filtered out all plots from radar A that are deemed likely to have been due to wind turbines and those that are deemed likely to be due to aircraft are used in a known multi radar technique together with plots from the various radars outside of the wind farm zone.

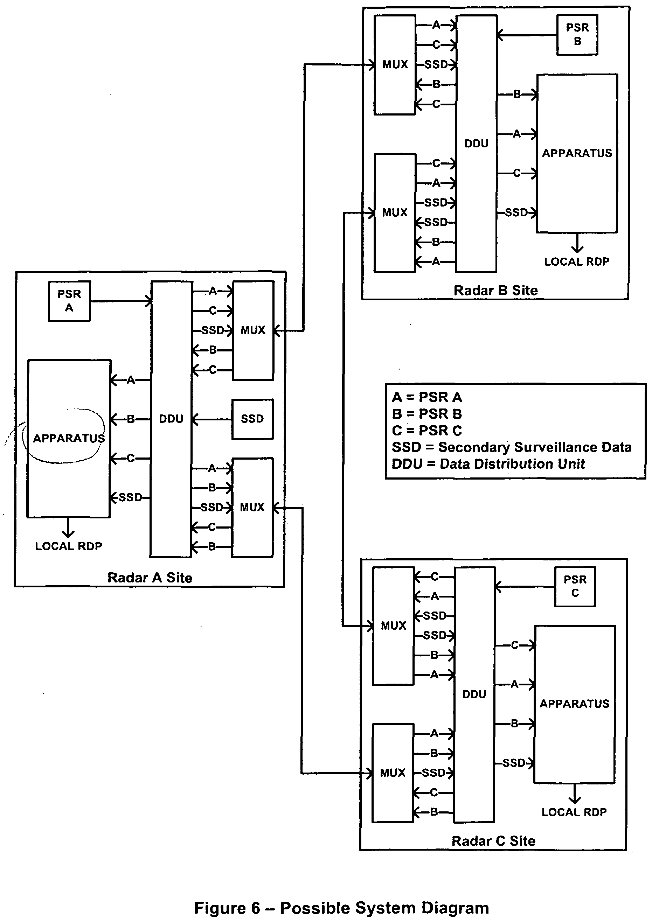

An application where all three radar are affected by the turbines may use a system architecture as suggested in Figure 6.

## Claims

1. Apparatus for filtering output signals from a first radar used for air traffic control, comprising:
means arranged to receive plot extracted output signals from the first radar due to detection by said radar of a target in a sub-area of the area of coverage of said radar in which enhancement is desired;
means arranged to obtain plot extracted output signals from two or more remote radars also used for air traffic control and having an area of coverage encompassing the sub-area in which enhancement is required;
means arranged to determine whether or not to pass data from the first radar indicative of the target for further reporting to an air traffic control centre based on the signals from the two or more remote radars; said means arranged to determine identifying whether the data from the first radar are associated with a previously established air traffic track, and, if not, wherein said means arranged to determine does **not** pass on the data indicative of the target if the target is detected by **none** of the remote radars; and wherein said means arranged to determine **does** pass on the data indicative of the target if the target is detected by **all** of the remote radars; and
wherein, if the target is detected by at least one, but not all of the remote radars, the means arranged to determine is configured to perform further processing of the signals to determine whether or not to pass on the data.

2. Apparatus as claimed in claim 1, comprising:
means obtaining data indicative of known positions of non-aircraft targets within the area in which enhancement is desired;
means comparing the signals with said data and making said determination based on said comparison.

3. The apparatus of claim 1, wherein the signals from two remote radars are obtained, and wherein said means arranged to determine is configured to operate as follows:
if the signals from the first radar correlate to known positions of non-aircraft targets and the target is detected by only one remote radar, said data is **not** passed;
if the signals from the first radar correlate to known positions and the target is detected by both remote radars, said data is passed;
if the signals from the first radar do not correlate to known positions and the target is detected by at least one remote radar, said data is passed.

4. A method for filtering output signals from a first radar used for air traffic control, comprising:
receiving plot extracted output signals from the first radar due to detection by said radar of a target in a sub-area of the area of coverage of said radar in which enhancement is desired;
obtaining plot extracted output signals from two or more remote radars also used for air traffic control and having an area of coverage encompassing the sub-area in which enhancement is required;
determining whether or not to pass data from the first radar indicative of the target for further reporting to an air traffic control centre based on the signals from the two or more remote radars; wherein the step of determining includes determining if the data from the first radar are associated with a previously established track and, if not: **not** passing on the data indicative of the target if the target is detected by **none** of the remote radars; and passing on the data indicative of the target if the target is detected by **all** of the remote radars; and wherein, if the target is detected by at least one, but not all of the remote radars, further processing of the signals is performed to determine whether or not to pass on the data.

## Patentansprüche

1. Vorrichtung zum Filtern von Ausgangssignalen von einem ersten Radar, das zur Luftverkehrskontrolle verwendet wird, Folgendes umfassend:
Mittel, die dafür angeordnet sind, aufgrund der Erkennung eines Ziels in einem Teilbereich des Abdeckungsbereichs des Radars, in welchem die Verstärkung gewünscht ist, durch das Radar plotextrahierte Ausgangssignale von einem ersten Radar zu empfangen,
Mittel, die dafür angeordnet sind, plotextrahierte Ausgangssignale von zwei oder mehr fernen Radaren zu gewinnen, die ebenfalls zur Luftverkehrskontrolle verwendet werden und einen Abdeckungsbereich aufweisen, der den Teilbereich umfasst, in dem die Verstärkung erforderlich ist,
Mittel, die dafür angeordnet sind, basierend auf den Signalen von den zwei oder mehr fernen Radaren festzulegen, ob Daten von dem ersten Radar, die das Ziel angeben, zur Weitermeldung an ein Luftverkehrskontrollzentrum weiterzuleiten sind oder nicht,
wobei die Mittel, die zum Festlegen angeordnet sind, bestimmen, ob die Daten von dem ersten Radar mit einer zuvor ermittelten Luftverkehrsspur in Verbindung stehen, und
wenn nicht, wobei die Mittel, die zum Festlegen angeordnet sind, die Daten, die das Ziel angeben, nicht weiterleiten, wenn das Ziel von keinem der fernen Radare erkannt wird, und wobei die Mittel, die zum Festlegen angeordnet sind, die Daten, die das Ziel angeben, weiterleiten, wenn das Ziel von allen fernen Radaren erkannt wird, und
wobei die Mittel, die zum Festlegen angeordnet sind, dafür konfiguriert sind, eine weitere Verarbeitung der Signale durchzuführen, um festzulegen, ob die Daten weiterzuleiten sind oder nicht, wenn das Ziel von mindestens einem, aber nicht von allen fernen Radaren erkannt wird.

2. Vorrichtung nach Anspruch 1, Folgendes umfassend:
Mittel zum Gewinnen von Daten, die bekannte Positionen von Zielen, die keine Flugzeuge sind, in dem Bereich angeben, in dem Verstärkung erwünscht ist,
Mittel zum Vergleichen der Signale mit den Daten und Vornehmen der Festlegung basierend auf dem Vergleich.

3. Vorrichtung nach Anspruch 1, wobei die Signale von zwei fernen Radaren gewonnen werden und wobei die Mittel, die zum Festlegen angeordnet sind, dafür konfiguriert sind, wie folgt zu arbeiten:
wenn die Signale von dem ersten Radar bekannten Positionen von Zielen, die keine Flugzeuge sind, entsprechen und das Ziel durch nur einen fernen Radar erkannt wird, werden die Daten nicht weitergeleitet,
wenn die Signale von dem ersten Radar bekannten Positionen entsprechen und das Ziel durch beide fernen Radare erkannt wird, werden die Daten weitergeleitet,
wenn die Signale von dem ersten Radar keinen bekannten Positionen entsprechen und das Ziel durch mindestens einen fernen Radar erkennt wird, werden die Daten weitergeleitet.

4. Verfahren zum Filtern von Ausgangssignalen von einem ersten Radar, der zur Luftverkehrskontrolle verwendet wird, Folgendes umfassend:
Empfangen plotextrahierter Ausgangssignale von dem ersten Radar aufgrund der Erkennung eines Ziels in einem Teilbereich des Abdeckungsbereichs des Radars, in welchem die Verstärkung gewünscht ist, durch das Radar,
Gewinnen plotextrahierter Ausgangssignale von zwei oder mehr fernen Radaren, die ebenfalls zur Luftverkehrskontrolle verwendet werden und einen Abdeckungsbereich aufweisen, der den Teilbereich umfasst, in dem die Verstärkung erforderlich ist,
Festlegen, ob Daten von dem ersten Radar, die das Ziel angeben, zur Weitermeldung an ein Luftverkehrskontrollzentrum weiterzuleiten sind oder nicht, basierend auf den Signalen von den zwei oder mehr fernen Radaren,
wobei der Schritt des Festlegens das Festlegen beinhaltet, ob die Daten von dem ersten Radar mit einer zuvor ermittelten Spur in Verbindung stehen, und
wenn nicht, kein Weiterleiten der Daten, die das Ziel angeben, wenn das Ziel von keinem der fernen Radare erkannt wird, und
Weiterleiten der Daten, die das Ziel angeben, wenn das Ziel von allen fernen Radaren erkannt wird,
und wobei, wenn das Ziel von mindestens einem, aber nicht von allen fernen Radaren erkannt wird, ein weiteres Verarbeiten der Signale durchgeführt wird, um festzulegen, ob die Daten weiterzuleiten sind oder nicht.

## Revendications

1. Appareil de filtrage de signaux de sortie d'un premier radar utilisé pour le contrôle du trafic aérien, comprenant :
des moyens agencés pour recevoir des signaux de sortie extraits de tracé du premier radar en raison d'une détection par ledit radar d'une cible dans une sous-zone de la zone de couverture dudit radar dans laquelle une amélioration est souhaitée ;
des moyens agencés pour obtenir des signaux de sortie extraits de tracé d'au moins deux radars distants également utilisés pour le contrôle du trafic aérien et ayant une zone de couverture englobant la sous-zone dans laquelle une amélioration est nécessaire ;
des moyens agencés pour déterminer s'il faut ou non transmettre des données du premier radar indiquant la cible pour un signalement supplémentaire à un centre de contrôle du trafic aérien sur la base des signaux des au moins deux radars distants ;
lesdits moyens agencés pour déterminer identifiant si les données du premier radar sont associées à une piste du trafic aérien précédemment établie et, si tel n'est pas le cas, dans lequel lesdits moyens agencés pour déterminer **ne transmettent pas** les données indiquant la cible si la cible n'est détectée par **aucun** des radars distants, et dans lequel lesdits moyens agencés pour déterminer **transmettent** les données indiquant la cible si la cible est détectée par **tous** les radars distants ; et
dans lequel, si la cible est détectée par au moins l'un, mais pas la totalité, des radars distants, les moyens agencés pour déterminer sont configurés pour effectuer un traitement supplémentaire des signaux pour déterminer s'il faut ou non transmettre les données.

2. Appareil selon la revendication 1, comprenant :
des moyens obtenant des données indicatives de positions connues de cibles non-aéronef à l'intérieur de la zone dans laquelle une amélioration est souhaitée ;
des moyens comparant les signaux auxdites données et réalisant ladite détermination sur la base de ladite comparaison.

3. Appareil selon la revendication 1, dans lequel les signaux de deux radars distants sont obtenus, et dans lequel lesdits moyens agencés pour déterminer sont configurés pour fonctionner comme suit :
si les signaux du premier radar sont en corrélation avec des positions connues de cibles non-aéronef et la cible est détectée par un seul radar distant, lesdites données ne sont pas transmises ;
si les signaux du premier radar sont en corrélation avec des positions connues et la cible est détectée par les deux radars distants, lesdites données sont transmises ;
si les signaux du premier radar ne sont pas en corrélation avec des positions connues et la cible est détectée par au moins un radar distant, lesdites données sont transmises.

4. Procédé de filtrage de signaux de sortie d'un premier radar utilisé pour le contrôle du trafic aérien, comprenant :
la réception de signaux de sortie extraits de tracé du premier radar en raison d'une détection par ledit radar d'une cible dans une sous-zone de la zone de couverture dudit radar dans laquelle une amélioration est souhaitée ;
l'obtention de signaux de sortie extraits de tracé d'au moins deux radars distants également utilisés pour le contrôle du trafic aérien et ayant une zone de couverture englobant la sous-zone dans laquelle une amélioration est nécessaire ;
le fait de déterminer s'il faut ou non transmettre des données du premier radar indiquant la cible pour un signalement supplémentaire à un centre de contrôle du trafic aérien sur la base des signaux des au moins deux radars distants ;
dans lequel l'étape de détermination inclut le fait de déterminer si les données du premier radar sont associées à une piste précédemment établie et, si tel n'est pas le cas, **la non-transmission** des données indiquant la cible si la cible n'est détectée par **aucun** des radars distants; et la transmission des données indiquant la cible si la cible est détectée par **tous** les radars distants ; et dans lequel, si la cible est détectée par au moins l'un, mais pas la totalité, des radars distants, un traitement supplémentaire des signaux est effectué pour déterminer s'il faut ou non transmettre les données.
